# EUROPEAN PATENT SPECIFICATION

(11) **EP 3 972 229 B1**
(45) Date of publication and mention of the grant of the patent: **26.07.2023**
(21) Application number: 20814510.2
(22) Date of filing: 08.04.2020
(51) Int. Cl.: H04M 1/02, H04M 1/03, H04N 23/57

(54) **TERMINAL DEVICE**
ENDGERÄTEVORRICHTUNG
DISPOSITIF TERMINAL

(30) Priority: 24.05.2019 CN 201920758202 U
(43) Date of publication of application: 23.03.2022
(73) Proprietor: GUANGDONG OPPO MOBILE TELECOMMUNICATIONS CORP., LTD., Dongguan, Guangdong 523860 (CN)
(72) Inventor: WANG, Qiang, Dongguan, Guangdong 523860 (CN); HUANG, Maozhao, Dongguan, Guangdong 523860 (CN); LI, Biao, Dongguan, Guangdong 523860 (CN)
(74) Representative: Fassio, Valeria
(86) International application number: PCT/CN2020/083623
(87) International publication number: WO 2020/238419

(56) References cited:
- EP-A1- 3 734 943
- CN-A- 108 494 903
- CN-A- 108 650 357
- CN-A- 108 683 795
- CN-U- 207 410 380
- CN-U- 208 434 100

## Description

### TECHNICAL FIELD

The present disclosure relates to the field of terminal technologies, and in particular to a terminal device. The invention is set out in the appended set of claims.

### BACKGROUND

A front camera is generally provided on a side of a mobile terminal where a display area of display screen of the terminal device is located, and it is difficult to make the front camera serve as a rear camera.

CN207410380U1 discloses mobile terminal, including a main body, a camera assembly structure and a driving device, where the main body is provided with an accommodating space; The camera assembly structure includes an accommodating part, a camera module and a first rotary connecting piece, where the accommodating part is accommodated in an accommodating space; The camera module is accommodated in the accommodating part; The first rotary connecting piece connects the accommodating part with the main part, and makes the accommodating part rotate relative to the main part with the first rotary connecting piece as the axis; The driving device is arranged inside the main body and connected with the first rotary connecting piece to drive the containing part to rotate out or into the containing space or into the containing space relative to the main body. The mobile terminal provided by the embodiment of the application has a high screen-to-body ratio.

CN108494903A1 discloses an electronic component, and the electronic component includes a first flexible circuit board, a receiver and a camera component, where the first flexible circuit board includes a first part, a second part and an accommodating part connected between the first part and the second part, the accommodating part is sunken inwards relative to the first part and the second part to form a collection space, and the accommodating part is provided with a first through hole; the receiver is at least partially located in the collection space, and a sound generated by the receiver propagates outwards after passing through the first through hole; and the camera component is electrically connected with the first flexible circuit board, the camera component is located on the first part and/or the second part, moreover, the camera component and the receiver are arranged in contrary directions at two sides of the first flexible circuit board. The invention also discloses an electronic device. Z direction size of the electronic component and the electronic device is saved, and utilization of inner space and improvement of screen-to-body ratio of a mobile phone are facilitated.

CN108650357A1 discloses a mobile communication terminal. The mobile communication terminal includes a back case and a sensor assembly; the sensor assembly includes a camera module, a telephone receiver module and a photosensitive hole; the edge of the back case is provided with a mounting groove matched with the sensor assembly; and the sensor assembly is mounted in the mounting groove at the edge position of the back case through a rotatable device. The mobile communication terminal provided by the invention can improve the screen-to-body ratio. The invention further provides a method for controlling the rotation of the sensor assembly.

CN208434100U1 discloses an electronic equipment, having the display surface, and the electronic equipment is provided with the first phonate hole sum channel of mutual intercommunication with one end, and first phonate hole forms towards the display surface orientation from electronic equipment is inside, and the passageway forms towards the inside orientation of electronic equipment from the electronic equipment periphery, electronic equipment is including removing the subassembly, remove the subassembly can follow the passageway stretch out to the external or shrink of electronic equipment in electronic equipment, remove the subassembly and be provided with the second phonate hole, remove the subassembly and include the speaker, sound transmissible to second phonate hole that the speaker sent, when the removal subassembly stretched out outside electronic equipment along the passageway, the second phonate hole exposed from electronic equipment's one end, and the speaker is spoken through the second phonate hole, when the removal subassembly contracts in electronic equipment along the passageway, and second phonate hole and first phonate hole intercommunication, the speaker is spoken through second phonate hole and first phonate hole.

EP3734943A1 discloses electronic device, which is published on November 4 2020. The electronic device includes a device body and a rotatable module. The rotatable module is rotatably connected to the device body. The device body defines a receiver window. The rotatable module includes a rotatable base, a camera module, and a receiver module, where the camera module and the receiver module are mounted in the rotatable base. The receiver module defines a first sound-guide channel on a side of the receiver module and a second sound-guide channel on an opposite side of the receiver module. The first sound-guide channel is in communication with the receiver window when the rotatable module is folded with respect to the device body, and the second sound-guide channel is in communication with the receiver window when the rotatable module is unfolded with respect to the device body. A control method of an electronic device is also provided. According to the present disclosure, screen-to-body ratio of the electronic device can be increased.

### SUMMARY

In view of above, it is necessary to provide a terminal device. The invention is set out in the appended set of claims.

### BRIEF DESCRIPTION OF THE DRAWINGS

In order to clearly illustrate the technical solutions in the embodiments of the present disclosure or the related art, drawings used in the description of the embodiments or the related art will be briefly introduced below. Obviously, the drawings in the following description illustrates only some embodiments of the present disclosure, and those of ordinary skill in the art can also obtain drawings of other embodiments according to these drawings without paying any creative work.
FIG. 1 is a rear view of a terminal device according to the embodiments of the disclosure, in which a mounting base of the terminal device is located in a first position.
FIG. 2 is a left view of the terminal device shown in FIG.1.
FIG. 3 is a main view of the terminal device shown in FIG. 1.
FIG. 4 is a top view of the terminal device shown in FIG. 3.
FIG. 5 is an exploded view of the mounting base of the terminal device shown in FIG. 4 which is illustrated from one viewing angle.
FIG. 6 is a rear view of the terminal device shown in FIG. 1, in which the mounting base of the terminal device is located in a second position.
FIG. 7 is a main view of the terminal device shown in FIG. 6.
FIG. 8 is an exploded view of the mounting base of the terminal device shown in FIG. 4 which is illustrated from another viewing angle.
FIG. 9 is a main view of the mounting base of the terminal device shown in FIG. 4.
FIG. 10 is a cross-sectional view of the mounting base of the terminal device shown in FIG. 9 which is taken along line B-B.
FIG. 11 is an exploded view of the terminal device shown in FIG. 1.
FIG. 12 is an exploded view of the terminal device shown in FIG. 11 with some parts removed.
FIG. 13 is a schematic enlarged view of location A of the terminal device shown in FIG. 1.
FIG. 14 is a partial view of the terminal device shown in FIG. 12.
FIG. 15 is a partial view of the terminal device shown in FIG. 11.
FIG. 16 is a perspective view of an output shaft of the terminal device shown in FIG. 12.
FIG. 17 is an exploded view of the output shaft of the terminal device shown in FIG. 16.
FIG. 18 is a main view of the output shaft of the terminal device shown in FIG. 16.
FIG. 19 is a cross-sectional view of the output shaft of the terminal device shown in FIG. 18 which is taken along line C-C.
FIG. 20 is a structural block diagram of a terminal device provided in the embodiments of the present disclosure.

### DETAILED DESCRIPTION OF PREFERRED EMBODIMENTS

In order to facilitate the understanding of the disclosure, the disclosure will be described below comprehensively with reference to the drawings. The drawings show preferred embodiments of the disclosure.

The term "terminal device" used herein includes, but is not limited to, devices that can be connected in any one or some of the following connections to receive and/or send communication signals:
(1) Wired connection, for example, the connection is established via Public Switched Telephone Networks (PSTN), Digital Subscriber Line (DSL), a digital cable, and a direct cable; and
(2) Wireless connection, for example, the connection is established via cellular network, Wireless Local Area Network (WLAN), digital television network such as DVB-H network, satellite network, and AM-FM broadcast transmitter.

The terminal devices configured to communicate wirelessly may be referred to as "mobile terminals". Examples of mobile terminals include, but are not limited to, the following electronic devices:
(1) A satellite phone or cellular phone;
(2) A Personal Communications System (PCS) terminal that can incorporate a cellular radio telephone with capacities of data processing, fax and data communication;
(3) A radio telephone, pager, Internet/Intranet access, Web browser, note book, calendar, Personal Digital Assistant (PDA) equipped with a Global Positioning System (GPS) receiver;
(4) A conventional laptop and/or palmtop receiver; and
(5) A conventional laptop and/or palmtop radio telephone transceiver, etc.

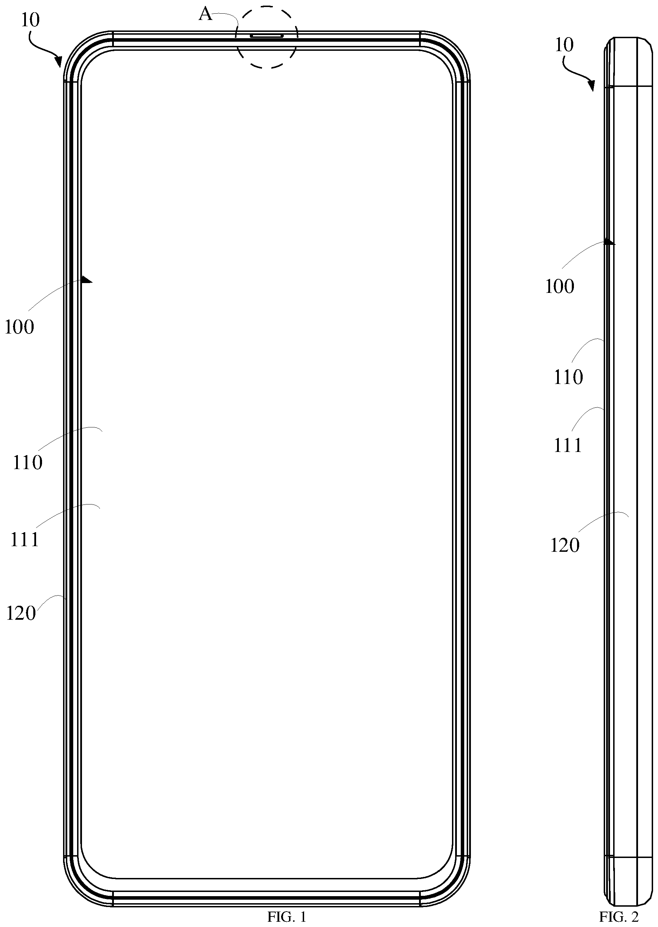

Referring to FIG. 1 to FIG. 4, in some embodiments, a terminal device 10 is a smart phone. The terminal device 10 includes a main body 100 and a mounting base 200. The main body 100 includes a display screen module 110, a display area of the display screen module is located at a front side of the main body, and the display screen module 110 may be used to display information and provide an interactive interface to a user. A mounting groove 101 is provided on a rear side of the main body 100 that faces away from the display screen module 110, and a sound output channel 103 is provided in a groove wall of the mounting groove 101 and is communicated with the front side of the main body. In some embodiments, the display screen module 110 includes a screen protection cover 111 and a display screen, and the screen protection cover 111 covers the display screen to protect the display screen. The display screen may be a Liquid Crystal Display (LCD) screen or an Organic Light-Emitting Diode (OLED) screen. The sound output channel 103 extends to the front side of the main body where the display area of the display screen module 110 is located, that is, the sound output channel 103 can be observed from the front side where the display area of the display screen module 110 is located.

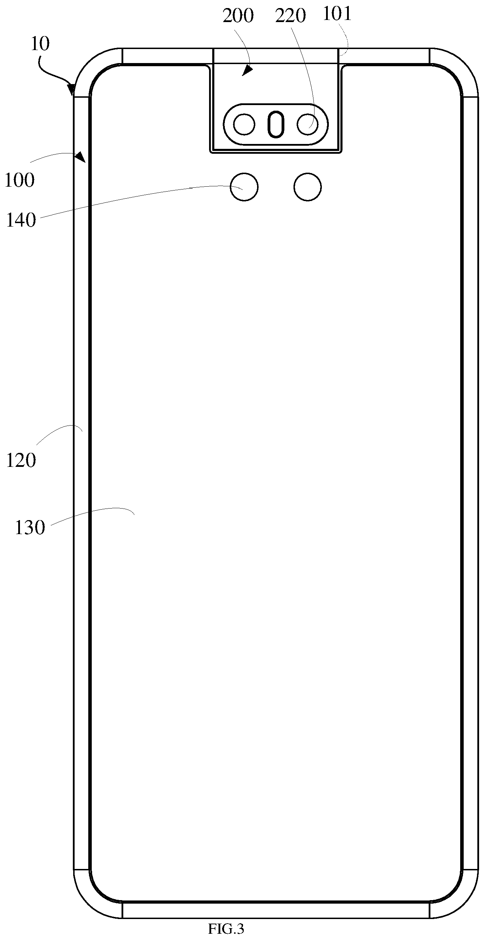

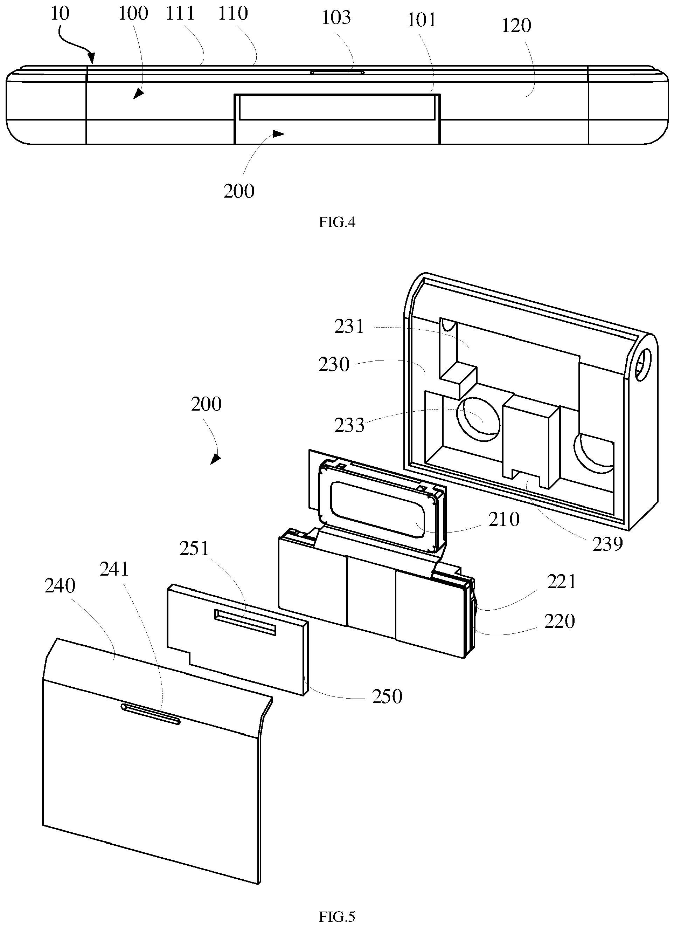

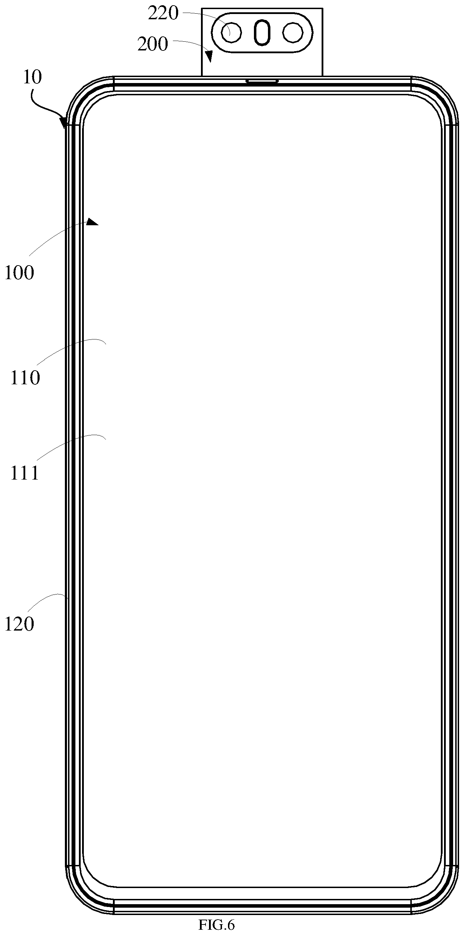

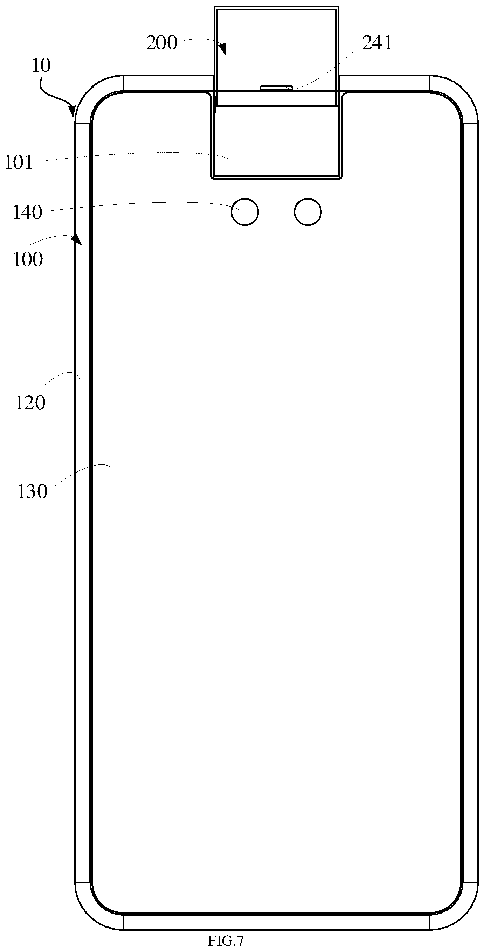

Referring to FIG. 5 to FIG. 7, the mounting base 200 includes a receiver 210 and a camera module 220. The mounting base 200 is disposed at the mounting groove 101, and is rotated to a first position or a second position relative to the main body 100. Referring to FIG. 1 and FIG. 3, as the mounting base 200 is in the first position, the mounting base 200 is accommodated in the mounting groove 101, the camera module 220 is exposed to a rear side of the main body, and the receiver 210 is enabled to output sound through the sound output channel 103, so that the sound can come out of the front side of the main body where the display area of the display screen module 110 is located, to facilitate the user to listen to voice messages, such as calls and voice messages. As the mounting base 200 is in the first position, the user may use the camera module 220 as a rear camera. For example, the user may perform operations, such as close-range shooting, long-range shooting, and video recording, via the camera module 220. Referring to FIG. 6 and FIG. 7, as the mounting base 200 is in the second position, the mounting base is out of the mounting groove, the camera module 220 is exposed to the front side where the display area of the display screen module 110 is located. As the mounting base 200 is in the second position, the user may use the camera module 220 as a front camera. For example, the user may perform operations, such as self-portraits and video calls, via the camera module 220.

For the above terminal device 10, as the mounting base 200 is in the first position, the camera module 220 is exposed to the rear side of the display screen module 110, and as the mounting base 200 is in the second position, the camera module 220 is exposed to the front side where the display area of the display screen module 110 is located, so that the camera module 220 can be switched between the front and rear cameras, to improve the convenience of use and save the cost of the components. As the mounting base 200 is in the first position, the camera module 220 does not have to occupy an area of the front side of the main body where the display area of the display screen module 110 is located, so that a screen-to-body ratio of the terminal device 10 can be increased. For example, the screen-to-body ratio of the terminal device 10 under the above arrangement may be more than 85%. In addition, since the mounting base 200 includes the receiver 210, and the receiver 210 can output sound through the sound output channel 103 as the mounting base 200 is in the first position, a compact arrangement of the components is achieved and the convenience of use is improved.

In some embodiments, as shown in FIG. 7, the mounting base 200 is substantially in shape of a rectangular parallelepiped. The receiver 210 outputs the sound from a side of the mounting base 200, and the camera module 220 receives light from a side of the mounting base 200 that is away from the receiver 210. The receiver 210 outputs the sound from the rear side of the display screen module 110 as the mounting base 200 is in the second position. That is, as the mounting base 200 is in the second position, the sound of the receiver 210 is transmitted from the rear side of the main body that is away from the display area of the display screen module 110, and the voice message can be normally listened to at the side of the display area of the display screen module 110 due to the transmission characteristics of sound.

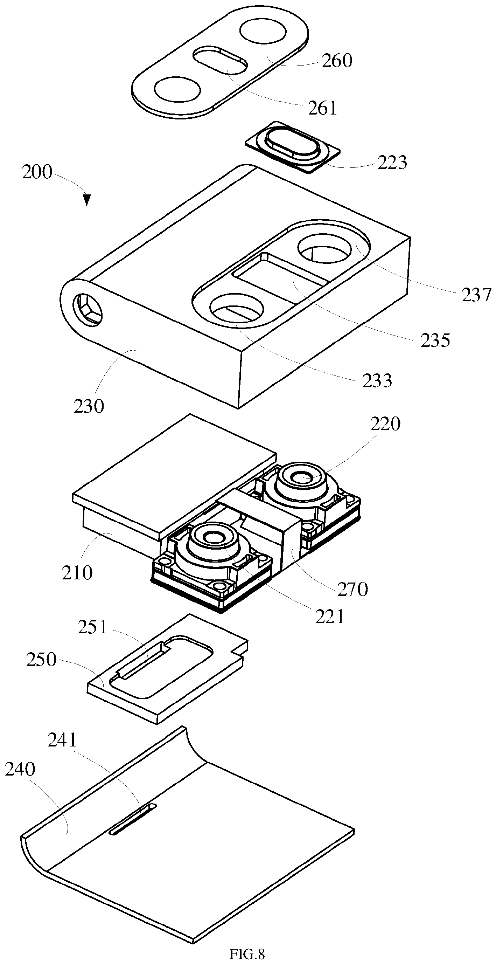

Referring to FIG. 5 and FIG. 8, the mounting base 200 includes a base body 230 and a cover plate 240. The base body 230 may be made of a metal material, such as aluminum alloy or stainless steel. The base body 230 may also be made of a non-metal material, such as plastic. The base body 230 is provided with an accommodation groove 231. The receiver 210 and the camera module 220 are accommodated in the accommodation groove 231, and the cover plate 240 covers the accommodation groove 231. The cover plate 240 is provided with a first sound hole 241 for the receiver 210 to output sound. As the mounting base 200 is in the first position, the first sound hole 241 is communicated with the sound output channel 103. That is, as the mounting base 200 is in the first position, the cover plate 240 is located at a side of the base body 230 facing toward the display screen module 110. As the mounting base is in the second position, the cover plate is exposed to the rear side of the main body. The cover plate 240 may be made of a non-metal material, such as glass, plastic, or ceramic. The cover plate 240 may also be made of a metal material, such as aluminum alloy or stainless steel. In some embodiments, the first sound hole 241 is a slit, the sound output channel 103 is also a slit, and as the mounting base 200 is in the first position, the first sound hole 241 and the sound output channel 103 can be aligned and communicated with each other, so that the sound of the receiver 210 can be transmitted to the side where the display area of the display screen module 110 is located.

Further, the mounting base 200 includes a press plate 250. The press plate 250 is disposed in the accommodation groove 231, and two opposite sides of the press plate 250 respectively abut against the receiver 210 and the cover plate 240. The press plate 250 is provided with a second sound hole 251 for the receiver 210 to output sound, and the second sound hole 251 is communicated with the first sound hole 241. As the mounting base 200 is in the first position, the receiver 210 outputs the sound through the second sound hole 251, the first sound hole 241 and the sound output channel 103. As the mounting base 200 is in the second position, the receiver 210 outputs the sound through the second sound hole 251 and the first sound hole 241. The press plate 250 is used to abut against an end surface of the receiver 210 and an end surface of the cover plate 240, so that the receiver 210 can be reliably fixed in the mounting base 200. In some implementations, the press plate 250 can seal gaps located around the first sound hole 241 and the second sound hole 251. For example, the end surface of the receiver 210 clings to the end surface of the press plate 250 hermetically around the second sound hole 251, and the end surface of the press plate 250 clings to the cover plate 240 hermetically around the first sound hole 241; in this way, the sound is prevented from leaking from a gap between the press plate 250 and the cover plate 240, or a gap between the press plate 250 and the receiver 210, so as to prevent the sound from being broken and improve the sound effect.

Referring to FIG. 8, the base body 230 is provided with a first through hole 233 communicated with the accommodation groove 231. A first dent 235 is provided on a side of the base body 230 that is away from the accommodation groove 231, and the first through hole 233 is separated from the first dent 235. The camera module 220 includes a camera 221 and a flash 223. The first through hole 233 is used to receive light for the camera 221, and the first dent 235 is used to mount the flash 223. There may be one, or two, or more than two first through holes 233, and the number of the first through holes 233 is the same as the number of the cameras 221. For example, in some embodiments, the camera module 220 includes two cameras 221, and correspondingly, there are two first through holes 233, and the first dent 235 is located between the two first through holes 233. The two cameras 221 may be switched between the rear cameras and the front cameras. Since the rear camera 221 generally adopts a high-pixel camera 221, such arrangement enables the quality of front-facing shooting to be improved, for example, a good self-portrait effect can be achieved. The flash 223 can supply light for the shooting of the camera module 220. For example, in a dark environment, the flash 223 can supply light to improve the shooting quality of the camera module 220.

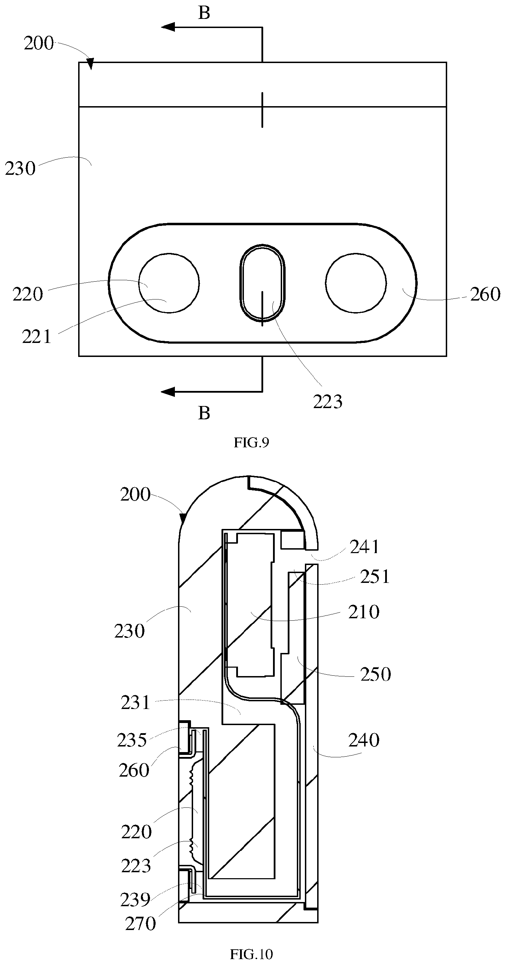

Further, referring to FIG. 8, the base body 230 is provided with a second dent 237 at a same side as the first dent. The first through hole 233 and the first dent 235 are located at the bottom of the second dent 237. The mounting base 200 includes a lens cover 260, and the lens cover 260 is disposed in the second dent 237 and covers the camera 221. A light-transmission hole 261 is provided in the lens cover 260, and the flash 223 passes through the light-transmission hole 261. The lens cover 260 may be made of glass or sapphire. The lens cover 260 is used to protect the camera module 220 from being damaged through scratching or collision. Further, referring to FIG. 5, FIG. 9 and FIG. 10, the bottom of the first dent 235 is provided with a second through hole 239 communicated with the accommodation groove 231. The mounting base 200 includes a flexible circuit board 270, and the flexible circuit board 270 passes through the second through hole 239 and is electrically connected with the flash 223. In some embodiments, the camera module 220 also is electrically connected with the flexible circuit board 270, and is connected to a main board of the terminal device 10 via the flexible circuit board 270, so that data and current are transmitted between the camera module 220 and the main board via the flexible circuit board 270.

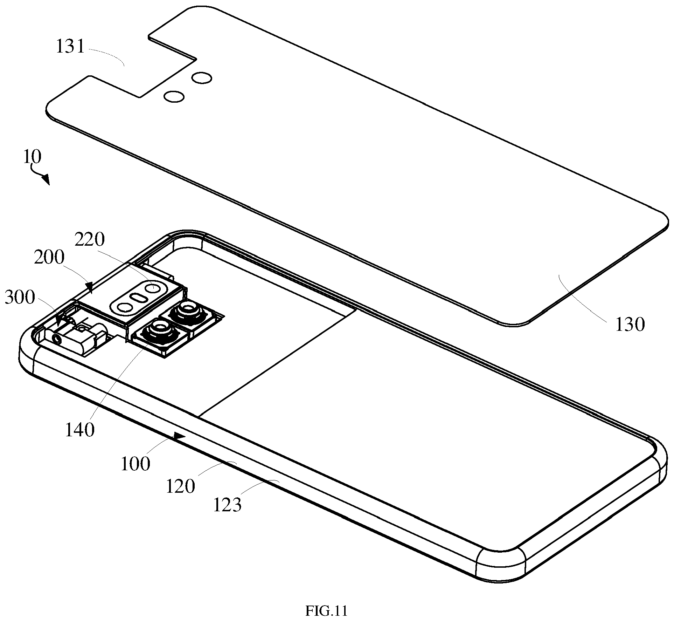

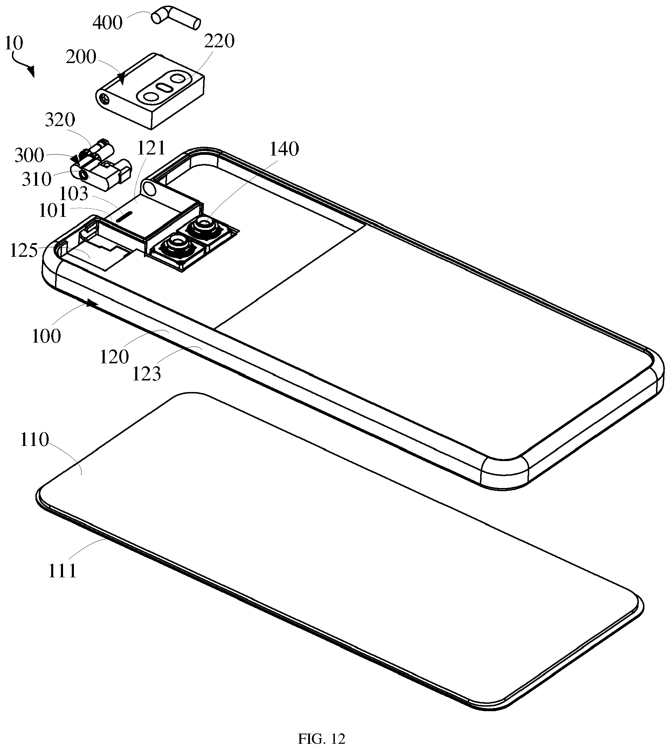

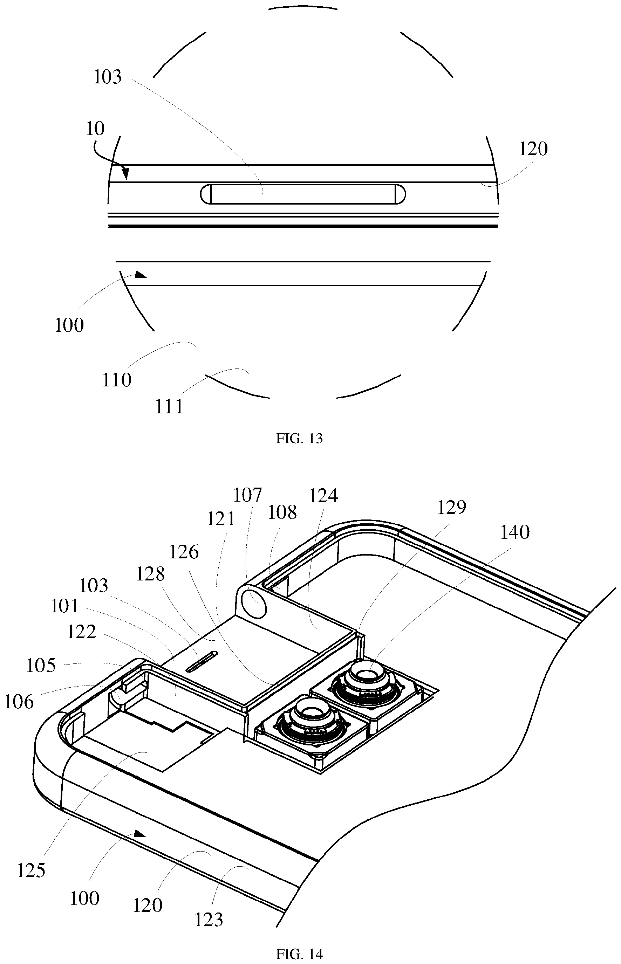

Referring to FIG. 11 and FIG. 12, the main body 100 includes a middle frame 120 and a rear cover 130. The middle frame 120 may be made of aluminum alloy, magnesium alloy, or stainless steel, etc. The rear cover 130 may be made of a non-metallic material, such as glass, ceramic or plastic, or may also be made of a metal material, such as aluminum alloy, or stainless steel. The display screen module 110 and the rear cover 130 are respectively assembled at two opposite sides of the middle frame 120. The mounting groove 101 extends to a side edge of the rear cover 130 to define a first notch 131 in the rear cover, and the mounting groove 101 extends to a side edge of the middle frame 120 to define a second notch 121 in the middle frame. The sound output channel 103 is located in the middle frame 120. Specifically, the middle frame 120 includes a middle plate 125 and an outer frame 123 disposed at an outer periphery of the middle plate 125. The display screen module 110 and the rear cover 130 are respectively assembled at two opposite sides of the middle plate 125, and the display screen module 110 and the rear cover 130 are respectively assembled at two opposite sides of the outer frame 123. A mounting space is defined between the middle frame 120 and the rear cover 130, and the mounting space may be used to mount electronic components of the terminal device 10, such as the main board and a battery. The mounting groove 101 runs through a part of the outer frame 123 to form the second notch 121. A side of the outer frame 123 away from the rear cover 130 is disposed around the outer periphery of the display screen module 110, and at the mounting groove 101, a part of the outer frame 123 is passed through by the mounting groove 101, and the other part of the outer frame 123 is continuous or connected to form a continuous structure, and the sound output channel 103 is provided in the part of the outer frame 123 that is passed through by the mounting groove, as shown in FIG. 13. In this way, a hole for outputting sound is prevented from being provided in the screen protection cover 111 of the display screen module 110, and the screen protection cover 111 can maintain a relatively regular shape, and the display area of the display screen module 110 can be increased to improve the screen-to-body ratio of the terminal device 10.

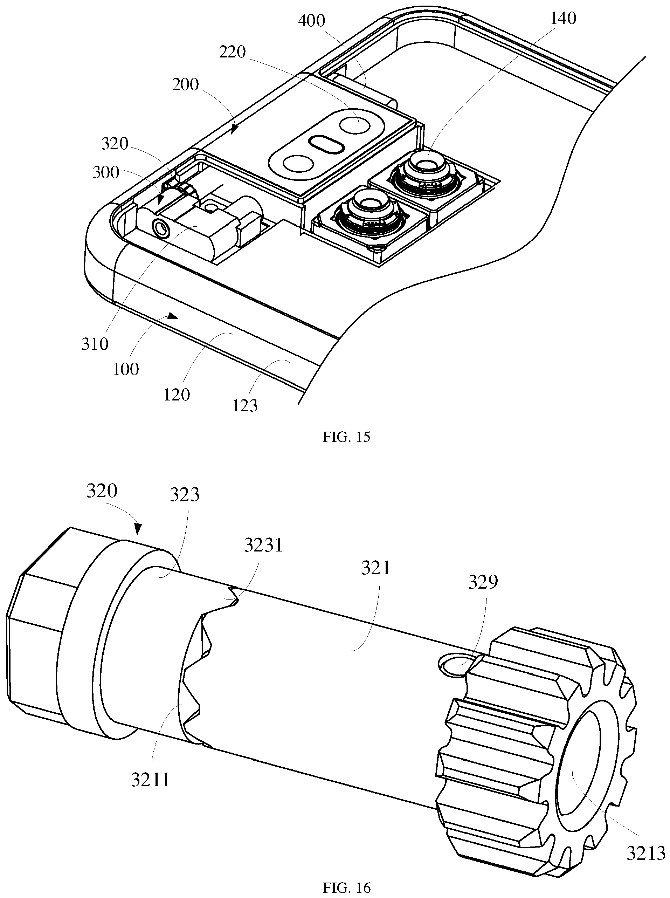

Referring to FIG. 14 and FIG. 15, the middle frame 120 includes a first side wall 122 and a second side wall 124 disposed opposite to each other, and includes a third side wall 126 and a bottom wall 128 which are connected between the first side wall 122 and the second side wall 124. The first side wall 122, the second side wall 124 and the third side wall 126 are disposed at an outer periphery of the bottom wall 128 and perpendicular to the middle plate, and the mounting groove 101 is defined by the bottom wall 128, the first side wall 122, the second side wall 124 and the third side wall 126. The sound output channel 103 is located in the bottom wall 128. At least one of the first side wall 122, the second side wall 124, and the third side wall 126 forms a step having a step surface 129 on a side thereof away from the mounting groove 101, and a height of the step surface 129 is lower than that of an end face of each of the first side wall 122, the second side wall 124 and the third side wall 126 that is away from the bottom wall 128. The rear cover 130 is attached onto the step surface 129, and the sides of the first side wall 122, the second side wall 124, and the third side wall 126 that are away from the bottom wall 128 pass through the first notch 131. Such arrangement is beneficial to the stability of the structure of the mounting groove 101, and is beneficial to the waterproof and dustproof performance of the terminal device 10. For example, by means of the design of the first side wall 122, the second side wall 124, and the third side wall 126, and the connection between the step surface 129 and the rear cover 130, not only the rear cover 130 can be stably supported, but also a sealing processing can be made between the rear cover 130 and the step surface 129, for example, a sealant is applied therebetween, to improve the waterproof and dustproof performance of the terminal device 10.

Further, a further camera module 140 is provided on a side of the third side wall 126 away from the mounting groove 101 and is accommodated in the mounting space, and the rear cover 130 is provided with a light-transmission area for the camera module 140 to receive light. In some embodiments, the rear cover 130 is made of glass. The rear cover 130 made of glass has a relatively high light transmittance, for example, the light transmittance thereof may be more than 85%. Therefore, there may be no need for the rear cover 130 to provide an opening to allow light transmission for the camera module 140, and the camera module 140 can receive light normally through the light-transmission area. In other implementations, the rear cover 130 may be made of a material with low light transmittance, such as metal, ceramic and plastic, and the rear cover 130 may be provided therein with an opening for another camera module 220 to receive light. In this case, the opening may serve as the light-transmitting area.

In some embodiments, the first side wall 122 is provided with a shaft hole 105 communicated with the mounting groove 101. The terminal device 10 includes a driving mechanism 300 disposed within the middle frame 120. The driving mechanism 300 includes a driver 310 and an output shaft 320 connected with each other. The driver 310 is connected with the middle plate 125, and the output shaft 320 is connected with the mounting base 200. The driver 310 is used to drive the output shaft 320 to rotate, to drive the mounting base 200 to rotate. Further, the output shaft 320 of the driving mechanism 300 passes through the shaft hole 105, the shaft hole 105 extends to the outer frame 123 to define a first recess 106 in the outer frame 123, and at least a part of the output shaft 320 of the driving mechanism 300 is accommodated in the first recess 106. Since such arrangement utilizes the internal structure of the outer frame 123, the output shaft 320 of the drive mechanism 300 can be as close as possible to an outer edge of the outer frame 123, and thus the drive mechanism 300 can be as close as possible to the outer frame 123, thereby facilitating compact arrangement of the internal components of the terminal device 10.

Further, the second side wall 124 is provided with a hole 107 penetrating the second side wall 124 and communicated with the mounting groove 101. The hole 107 extends to the outer frame 123 to define a second recess 108 in the outer frame 123. The terminal device 10 includes a wire pipe 400. The wire pipe 400 passes through the hole 107 to access the mounting base 200, and at least a part of the wire pipe 400 is accommodated in the second recess 108. The wire pipe 400 has a hollow structure and may be used to accommodate connection wires, so that the electronic components in the mounting base 200 can be powered or communicate with the main board of the terminal device 10. Since such arrangement utilizes the internal structure of the outer frame 123, the wire pipe 400 can be as close as possible to the outer edge of the outer frame 123, and the wire pipe 400 can be as close as possible to the outer frame 123, thereby facilitating compact arrangement of the internal components of the terminal device 10.

Referring to FIG. 16 to FIG. 19, the output shaft 320 includes a first shaft sleeve 321 and a second shaft sleeve 323. The first shaft sleeve 321 is driven by the driver 310, and the second shaft sleeve 323 is fixedly connected with the mounting base 200. One of the first shaft sleeve 321 and the second shaft sleeve 323 is provided with a clamping slot 3211, the other of the first shaft sleeve 321 and the second shaft sleeve 323 is provided with a protrusion 3231, and the protrusion 3231 is received in the clamping slot 3211, so that the first shaft sleeve 321 can drive, via the second shaft sleeve 323, the mounting base 200 to rotate relative to the main body 100. In some embodiments, one end of the first shaft sleeve 321 is provided with a first gear, and an output end of the driver 310 is provided with a second gear, and the second gear is engaged with the first gear, so that the driver 310 can drive the second shaft sleeve 323 to rotate. In other implementations, the output end of the driver 310 may be provided with a worm gear, and the first shaft sleeve 321 is set as a worm screw, and the transmission is enabled through the engagement of the worm gear and the worm screw, which is not repeated here.

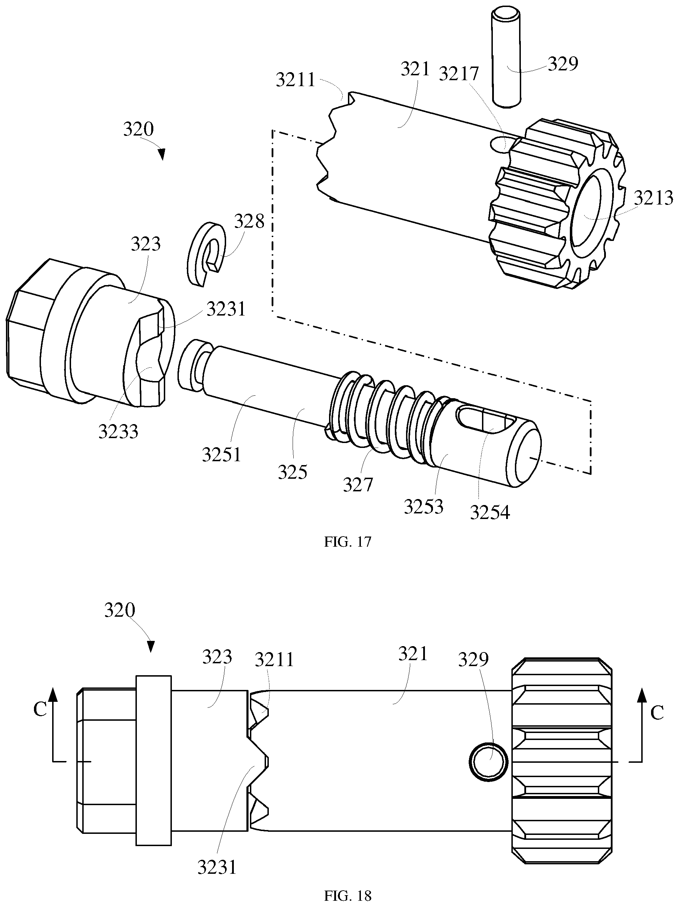

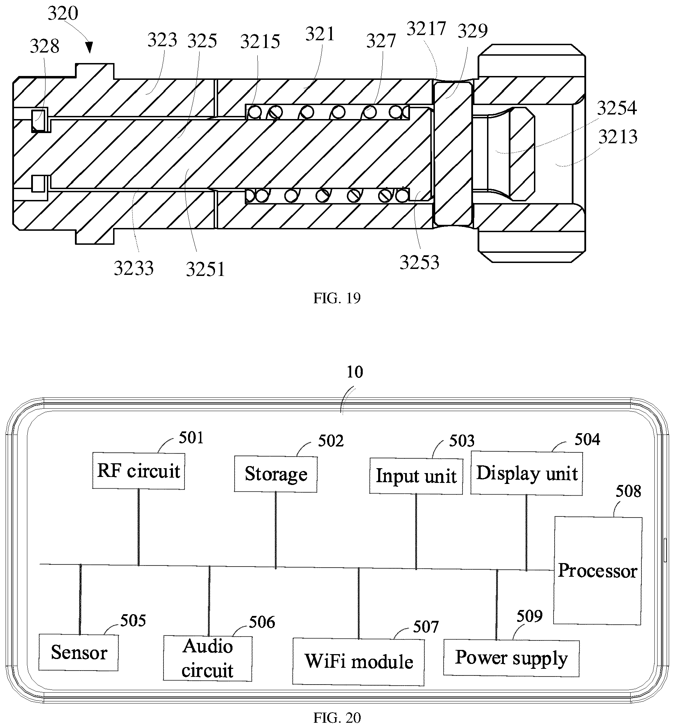

Further, referring to FIG. 17 and FIG. 19, the output shaft 320 includes a shaft rod 325, an elastic member 327 and a position-limiting member 329. The first shaft sleeve 321 is provided with a first mounting hole 3213, and the second shaft sleeve 323 is provided with a second mounting hole 3233. The first mounting hole 3213 runs through the first shaft sleeve 321 along an axial direction of the first shaft sleeve 321, and the second mounting hole 3233 runs through the second shaft sleeve 323 along an axial direction of the second shaft sleeve 323. The shaft rod 325 includes a shaft body 3251 and a connection portion 3253 connected with the shaft body 3251. A part of the shaft body 3251 passes through the first mounting hole 3213, the other part of the shaft body 3251 passes through the second mounting hole 3233, and the connection portion 3253 is received in the first mounting hole 3213. A step 3215 is formed on an inner wall of the first mounting hole 3213, the elastic member 327 is accommodated in the first mounting hole 3213 and is sleeved on the shaft body 3251. One end of the elastic member 327 abuts against the step 3215, and the other end of the elastic member 327 abuts against the connection portion 3253. The connection portion 3253 is provided with a position-limiting hole 3254. The first shaft sleeve 321 is provided with a clamping hole 3217 along a radial direction of the first shaft sleeve 321. The position-limiting member 329 passes through the clamping hole 3217 and is fixed to the first shaft sleeve 321, and the position-limiting member 329 passes through the position-limiting hole 3254. Rotation of the first shaft sleeve 321 drives, via the position-limiting member 329, the shaft rod 325 to rotate, and as the mounting base 200 is driven to rotate to the first position or the second position, the protrusion 3231 can be detached from the clamping slot 3211, so that the first shaft sleeve 321 moves in a direction away from the second shaft sleeve 323 and compresses the elastic member 327, and the position-limiting member 329 moves within the position-limiting hole 3254 in the direction away from the second shaft sleeve 323. By means of such arrangement, as the mounting base 200 is rotated to the first position or the second position, the mounting base 200 abuts against the middle frame 120, the mounting base 200 cannot continue rotating, and the second shaft sleeve 323 cannot continue rotating, whereas the first shaft sleeve 321 can continue rotating and produce jitters along the axial direction of the first shaft sleeve 321. The jitters can prevent the drive mechanism 300 from being damaged, and can generate a clear feedback. For example, as the mounting base 200 is rotated to the first position or the second position, the terminal device 10 will produce click-clack and vibrations to enhance the user experience.

Further, referring to FIG. 17 and FIG. 19, the output shaft 320 includes a snap ring 328, the snap ring 328 is clamped in a groove provided at an end of the shaft body 3251 away from the first shaft sleeve 321. During the process that the protrusion 3231 is detached from the clamping slot 3211, the snap ring 328 abuts against the second shaft sleeve 323, particularly abuts against a step formed on an inner wall of the second mounting hole. The snap ring 328 prevents the shaft rod 325 from retreating from the second mounting hole 3233. During the process that the first shaft sleeve 321 jitters along the shaft rod 325, the snap ring 328 prevents the shaft rod from rotating and thus increases the resistance to the rotation of the first shaft sleeve 321, to provide a buffering effect.

Referring to FIG. 20, which is a schematic structural diagram of the terminal device 10 provided in the embodiments of the present disclosure. The terminal device 10 may include a Radio Frequency (RF) circuit 501, a memory 502 including one or more computer-readable storage media, an input unit 503, a display unit 504, a sensor 505, an audio circuit 506, a Wireless Fidelity (WiFi) module 507, a processor 508 including one or more process cores, a power supply 509 and other components. Those skilled in the art can understand that, the terminal device 10 is not limited in the structure of the terminal device 10 shown in FIG. 20, and the terminal device 10 may include more or fewer components than those shown in the figure, or have a combination of some components or a different arrangement of the components.

The RF circuit 501 may be used to receive and send information, or to receive and send signals during a call. In particular, after the RF circuit 501 receives downlink information from a base station, it forwards the information to the one or more processor 208 for processing. In addition, the RF circuit 501 sends uplink data to the base station. Generally, the RF circuit 501 includes, but is not limited to, an antenna, at least one amplifier, a tuner, one or more oscillators, a Subscriber Identity Module (SIM) card, a transceiver, a coupler, a Low Noise Amplifier (LNA), a duplexer and the like. In addition, the RF circuit 501 may also communicate with other devices through wireless communication network. The wireless communication may use any communication standard or protocol, including but not limited to Global System of Mobile (GSM) communication, General Packet Radio Service (GPRS), Code Division Multiple Access (CDMA), Wideband Code Division Multiple Access (WCDMA), Long Term Evolution (LTE), E-mail, Short Messaging Service (SMS), etc.

The memory 502 is configured to store application programs and data. The application program stored in the memory 502 contains executable codes. The application programs may constitute various functional modules. The processor 508 performs various functional applications and data process by running the application programs stored in the memory 502. The memory 502 may mainly include a program storage area and a data storage area. The storage program area may store an operating system, application programs required by at least one function (such as a sound playback function, and an image playback function), etc. The data storage area may store data (such as audio data, and phone book) created during the use of the terminal device 10, etc. In addition, the memory 502 may include a high-speed random access memory, and may also include a non-volatile memory, such as at least one magnetic disk storage device, a flash memory device, or other volatile solid-state storage devices. Correspondingly, the memory 502 may further include a memory controller to allow the processor 508 and the input unit 503 to access the memory 502.

The input unit 503 may be configured to receive input numbers, character information or user characteristic information (such as fingerprints), and generate input signals corresponding to keyboard, mouse, joystick, optical or trackball inputs that are related to user settings and function control. In some embodiments, the input unit 503 may include a touch-sensitive surface and other input devices. The touch-sensitive surface, also called a touch screen or a touch pad, can collect a touch operation performed by the user on or near the touch-sensitive surface (for example, an operation performed by the user on or near the touch-sensitive surface with any suitable objects or accessories such as fingers and stylus), and drive a corresponding connection device according to a preset program. Optionally, the touch-sensitive surface may include a touch detection device and a touch controller. The touch detection device detects a touch position of the user and a signal generated by the touch operation, and transmits the signal to the touch controller. The touch controller receives the touch information from the touch detection device, converts the touch information into contact coordinates for sends them to the processor 508, and receives and executes commands sent by the processor 508.

The display unit 504 may be configured to display information input by the user or information provided to the user, and display various graphical user interfaces of the terminal device 10. The graphical user interface may be composed of graphics, texts, icons, videos, and any combination thereof. The display unit 504 may include a display panel. Optionally, the display panel may be configured in the form of a Liquid Crystal Display (LCD), an Organic Light-Emitting Diode (OLED), etc. Further, the touch-sensitive surface may cover the display panel. When detecting a touch operation on or near the touch-sensitive surface, the touch-sensitive surface transmits it to the processor 508 to determine a type of the touch event, and the processor 508 controls a corresponding visual output to be displayed on the display panel according to the type of the touch event. In FIG. 20, the touch-sensitive surface and the display panel are used as two independent components to implement the input and input functions, but in some implementations, the touch-sensitive surface and the display panel may be integrated to implement the input and output functions.

The terminal device 10 may also include at least one kind of sensor 505, such as a light sensor, a motion sensor, and other sensors. Specifically, the light sensor may include an ambient light sensor and a proximity sensor. The ambient light sensor adjusts brightness of the display panel according to brightness of the ambient light, and the proximity sensor closes the display panel and/or backlight when the terminal device 10 is moved to an ear of the user. As a kind of motion sensor, a gravity acceleration sensor can detect the magnitude of acceleration in various directions (usually in three axes), detect the magnitude and direction of gravity while at rest, and identify applications related to the phone posture (such as switching between landscape and portrait, related games, magnetometer posture calibration) and identify vibration for related functions (such as pedometer, and tapping), and the like. The terminal device 10 may also be equipped with other sensors such as gyroscope, barometer, hygrometer, thermometer, and infrared sensor, which are not exhaustive here.

The audio circuit 506 provides an audio interface between the user and the terminal device 10 via a speaker and a microphone. The audio circuit 506 converts the received audio data into an electric signal, and transmits the converted electric signal to the speaker; and the speaker converts the received electric signal into a sound signal for output. In another aspect, the microphone converts the collected sound signal into an electric signal, the audio circuit 506 receives and converts the electric signal into the audio data and outputs the converted audio data to the processor 508, and then the audio data processed by the processor 508 is sent to for example another terminal device 10 via the RF circuit 501, or the audio data processed by the processor 508 is output to the memory 502 for further processing. The audio circuit 506 may also include an earphone holder to provide communication between a peripheral earphone and the terminal device 10.

Wireless Fidelity (WiFi) belongs to a short-distance wireless transmission technology. The terminal device 10 may help the users receive and send emails, browse webpages, and access streaming media via the WiFi module 507. The WiFi module 507 provides the users with wireless broadband Internet access. Although FIG. 20 shows the WiFi module 507, it is understandable that the WiFi module 207 is not a necessary component of the terminal device 10, and can be omitted according to requirements without changing the essence of the invention.

The processor 508 is a control center of the terminal device 10, which sometimes referred to as a main controller. The processor 508 utilizes various interfaces and lines to connect the various parts of the entire terminal device 10, and performs various functions of the terminal device 10 and process data by running or executing the application programs stored in the memory 502 and invoking the data stored in the memory 502, so as to monitor the entire terminal device 10. Optionally, the processor 508 may include one or more process cores. Preferably, the processor 508 may integrate an application processor and a modem processor. The application processor mainly processes the operating system, user interfaces, and application programs, etc. The modem processor mainly processes wireless communication. It can be understood that, the above modem processor may not be integrated into the processor 508.

The terminal device 10 also includes the power supply 509 for supplying power to various components. Preferably, the power supply 509 may be logically connected with the processor 508 through a power management system, so that the functions, such as the charging, discharging, and power consumption management, can be performed through the power management system. The power supply 509 may also include one or more of components such as Direct Current (DC) or Alternating Current (AC) power supplies, a recharging system, a power failure detection circuit, a power converter or inverter, and a power status indicator.

Although it is not shown in FIG. 20, the terminal device 10 may also include a Bluetooth module and the like, which is not detailed here. In specific implementations, the various modules mentioned above may be implemented as independent entities, or may be combined arbitrarily as one or several entities, and the specific implementations of the above modules may refer to the previous method embodiments, which are not repeated here.

## Claims

1. A terminal device (10), comprising:
a main body (100) comprising a display screen module (110), wherein a mounting groove (101) is provided at a rear side of the main body (100) that is away from the display screen module (110), and a sound output channel (103) is provided in a groove wall of the mounting groove (101) and is communicated with a front side of the main body (100) where a display area of the display screen module (110) is located; and
a mounting base (200) comprising a receiver (210) and a camera module (220), wherein the mounting base (200) is rotatable relative to the main body (100) and switchable between a first position and a second position,
wherein as the mounting base (200) is in the first position, the mounting base (200) is accommodated in the mounting groove (101), the camera module (220) is exposed to the rear side of the main body (100), and the receiver (210) is configured to output sound through the sound output channel (103); and
wherein as the mounting base (200) is in the second position, the mounting base (200) is out of the mounting groove (101), and the camera module (220) is exposed to the front side of the main body (100); and the receiver (210) is configured to output the sound from the rear side of the main body (100);
wherein the main body (100) further comprises a middle frame (120) and a rear cover (130), the display screen module (110) and the rear cover (130) are respectively assembled at two opposite sides of the middle frame (120), the mounting groove (101) extends to a side edge of the rear cover (130), and the mounting groove (101) extends to a side edge of the middle frame (120);
wherein the middle frame (120) comprises a middle plate (125) and an outer frame (123) disposed at an outer periphery of the middle plate (125), the display screen module (110) and the rear cover (130) are respectively assembled at two opposite sides of the middle plate (125), the outer frame (123) is further disposed at an outer periphery of the display screen module (110), and the sound output channel (103) is located in the outer frame (123);
wherein the middle frame (120) further comprises: a first side wall (122) and a second side wall (124) disposed opposite to the first side wall (122); and a third side wall (126) and a bottom wall (128) which are connected between the first side wall (122) and the second side wall (124),
wherein the first side wall (122), the second side wall (124) and the third side wall (126) are disposed along an outer periphery of the bottom wall (128) and perpendicular to the middle plate (125), the mounting groove (101) is defined by the bottom wall (128), the first side wall (122), the second side wall (124) and the third side wall (126), and the sound output channel (103) is located in the bottom wall (128);
wherein the first side wall (122) is provided with a shaft hole (105) communicated with the mounting groove (101); the terminal device (10) further comprises a driving mechanism (300) disposed within the middle frame (120), the driving mechanism (300) comprises a driver (310) and an output shaft (320) connected with the driver (310), the output shaft (320) of the driving mechanism (300) passes through the shaft hole (105) and is connected with the mounting base (200), the driver (310) is configured to drive the output shaft (320) to rotate the mounting base (200) to be in
the first position or the second position; and the shaft hole (105) extends to the outer frame (123), a first recess (106) is defined in the outer frame (123), the driver (310) is connected with the middle plate (125), and at least a part of the output shaft (320) is accommodated in the first recess (106);
wherein the output shaft (320) comprises a first shaft sleeve (321) and a second shaft sleeve (323), the first shaft sleeve (321) is driven by the driver (310), and the second shaft sleeve (323) is connected with the mounting base (200); and one of the first shaft sleeve (321) and the second shaft sleeve (323) is provided with a clamping slot (3211), the other of the first shaft sleeve (321) and the second shaft sleeve (323) is provided with a protrusion (3231), the protrusion (3231) is received in the clamping slot (3211), the first shaft sleeve (321) is configured to drive, via the second shaft sleeve (323), the mounting base (200) to rotate relative to the main body (100);
**characterized in that**, the output shaft (320) further comprises a shaft rod (325), an elastic member (327) and a position-limiting member (329), the first shaft sleeve (321) is provided with a first mounting hole (3213), the second shaft sleeve (323) is provided with a second mounting hole (3233), the first mounting hole (3213) runs through the first shaft sleeve (321) along an axial direction of the first shaft sleeve (321), and the second mounting hole (3233) runs through the second shaft sleeve (323) along an axial direction of the second shaft sleeve (323); the shaft rod (325) comprises a shaft body (3251) and a connection portion (3253) connected with the shaft body (3251), a part of the shaft body (3251) passes through the first mounting hole (3213), the other part of the shaft body (3251) passes through the second mounting hole (3233), and the connection portion (3253) is received in the first mounting hole (3213); a further step (3215) is formed on an inner wall of the first mounting hole (3213), the elastic member (327) is accommodated in the first mounting hole (3213) and is sleeved on the shaft body (3251), one end of the elastic member (327) abuts against the further step (3215), and the other end of the elastic member (327) abuts against the connection portion (3253); the connection portion (3253) is provided with a position-limiting hole (3254), the first shaft sleeve (321) is provided with a clamping hole (3217) along a radial direction of the first shaft sleeve (321), the position-limiting member (329) passes through the clamping hole (3217) and is fixed to the first shaft sleeve (321), and the position-limiting member (329) passes through the position-limiting hole (3254); the first shaft sleeve (321) is configured to rotate and drive, via the position-limiting member (329), the shaft rod (325) to rotate; and when the mounting base (200) is in the first position or the second position, the protrusion (3231) is detachable from the clamping slot (3211) and the first shaft sleeve (321) is configured to move in a direction away from the second shaft sleeve (323) and to compress the elastic element, and the position-limiting member (329) is configured to move within the position-limiting hole (3254) in the direction away from the second shaft sleeve (323).

2. The terminal device (10) of claim 1, wherein the display screen module (110) comprises a display screen and a screen protection cover (111) arranged on the display screen, a first notch (131) is defined in the rear cover (130), a second notch (121) is defined in the middle frame (120).

3. The terminal device (10) of claim 2, wherein a first step having a step surface (129) is formed on a side of at least one of the first side wall (122), the second side wall (124), and the third side wall (126) that is away from the mounting groove (101), and a height of the step surface (129) is lower than a height of an end face of each of the first side wall (122), the second side wall (124) and the third side wall (126) that is away from the bottom wall (128); and
the rear cover (130) is attached onto the step surface (129), and a side of each of the first side wall (122), the second side wall (124), and the third side wall (126) that is away from the bottom wall (128) passes through the first notch (131).

4. The terminal device (10) of claim 1, wherein a further camera module (140) is located on a side of the third side wall (126) that is away from the mounting groove (101), the further camera module (140) is accommodated in a mounting space defined between the middle frame (120) and the rear cover (130), and
the rear cover (130) is provided with a light-transmission area, the light-transmission area is configured to transmit light to be received by the further camera module (140).

5. The terminal device (10) of claim 1, wherein the second side wall (124) is provided with a hole (107) penetrating the second side wall (124) and communicated with the mounting groove (101), the hole (107) extends to the outer frame (123) and thereby a second recess (108) is defined in the outer frame (123); and
the terminal device (10) further comprises a wire pipe (400), the wire pipe (400) passes through the hole (107) and accesses the mounting base (200), and at least a part of the wire pipe (400) is accommodated in the second recess (108).

6. The terminal device (10) of claim 1, wherein the output shaft (320) further comprises a snap ring (328), and the snap ring (328) is clamped at an end of the shaft body (3251) that is away from the first shaft sleeve (321), and the snap ring (328) is configured to abut against the second shaft sleeve (323) during a process that the protrusion (3231) is detached from the clamping slot (3211).

7. The terminal device (10) of any one of claims 1-6, wherein the mounting base (200) comprises a base body (230) and a cover plate (240), an accommodation groove (231) is defined in the base body (230), the receiver (210) and the camera module (220) are accommodated in the accommodation groove (231), and the cover plate (240) covers the accommodation groove (231);
a first sound hole (241) is provided in the cover plate (240), the first sound hole (241) is configured for sound output of the receiver (210); and
wherein as the mounting base (200) is in the first position, the cover plate (240) is located at a side of the base body (230) facing toward the display screen module (110), and the first sound hole (241) is communicated with the sound output channel (103).

8. The terminal device (10) of claim 7, wherein the mounting base (200) further comprises a press plate (250), two opposite sides of the press plate (250) respectively abut against the receiver (210) and the cover plate (240), and
a second sound hole (251) is provided in the press plate (250), the second sound hole (251) is also configured for the sound output of the receiver (210), and the second sound hole (251) is communicated with the first sound hole (241).

9. The terminal device (10) of claim 7, wherein the base body (230) is provided with a first through hole (233) communicated with the accommodation groove (231), a first dent (235) is disposed at a side of the base body (230) that is away from the accommodation groove (231), the first through hole (233) is separated from the first dent (235); and
the camera module (220) comprises a camera (221) and a flash (223), the first through hole (233) is configured to receive light for the camera (221), and the first dent (235) is configured to mount the flash (223).

10. The terminal device of claim 9, wherein a second dent (237) is provided on the base body (230) at a same side as the first dent (235), the first through hole (233) and the first dent (235) are located at a bottom of the second dent (237);
the mounting base (200) further comprises a lens cover (260), the lens cover (260) is disposed in the second dent (237) and covers the camera (221);
a light-transmission hole (261) is provided in the lens cover (260), and the flash (223) passes through the light-transmission hole (261); and
a bottom of the first dent (235) is provided with a second through hole (239) communicated with the accommodation groove (231), the mounting base (200) further comprises a flexible circuit board (270), and the flexible circuit board (270) passes through the second through hole (239) and is electrically connected with the flash (223).

## Patentansprüche

1. Endgerätevorrichtung (10), die Folgendes umfasst:
einen Hauptkörper (100), umfassend ein Anzeigebildschirmmodul (110), wobei eine Montagenut (101) an einer Rückseite des Hauptkörpers (100) bereitgestellt ist, die vom Anzeigebildschirmmodul (110) entfernt ist, und ein Klangausgabekanal (103) in einer Nutwand der Montagenut (101) bereitgestellt und mit einer Vorderseite des Hauptkörpers (100) verbunden ist, wo sich ein Anzeigebereich des Anzeigebildschirmmoduls (110) befindet; und
eine Montagebasis (200), umfassend einen Empfänger (210) und ein Kameramodul (220), wobei die Montagebasis (200) relativ zum Hauptkörper (100) drehbar und zwischen einer ersten Position und einer zweiten Position umschaltbar ist,
wobei, wenn die Montagebasis (200) in der ersten Position ist, die Montagebasis (200) in der Montagenut (101) aufgenommen ist, das Kameramodul (220) zur Rückseite des Hauptkörpers (100) freiliegt und der Empfänger (210) ausgelegt ist zum Ausgeben von Klang durch den Klangausgabekanal (103); und
wobei, wenn die Montagebasis (200) in der zweiten Position ist, die Montagebasis (200) außerhalb der Montagenut (101) ist und das Kameramodul (220) zur Vorderseite des Hauptkörpers (100) freiliegt; und der Empfänger (210) ausgelegt ist zum Ausgeben des Klanges von der Rückseite des Hauptkörpers (100);
wobei der Hauptkörper (100) ferner einen mittleren Rahmen (120) und eine hintere Abdeckung (130) umfasst, das Anzeigebildschirmmodul (110) und die hintere Abdeckung (130) jeweils an zwei einander gegenüberliegenden Seiten des mittleren Rahmens (120) zusammengebaut sind, sich die Montagenut (101) zu einer Seitenkante der hinteren Abdeckung (130) erstreckt und sich die Montagenut (101) zu einer Seitenkante des mittleren Rahmens (120) erstreckt;
wobei der mittlere Rahmen (120) eine mittlere Platte (125) und einen äußeren Rahmen (123), angeordnet an einem äußeren Umfang der mittleren Platte (125), umfasst, das Anzeigebildschirmmodul (110) und die hintere Abdeckung (130) entsprechend an zwei einander gegenüberliegenden Seiten der mittleren Platte (125) zusammengebaut sind, der äußere Rahmen (123) ferner an einem äußeren Umfang des Anzeigebildschirmmoduls (110) angeordnet ist und sich der Klangausgabekanal (103) im äußeren Rahmen (123) befindet;
wobei der mittlere Rahmen (120) ferner Folgendes umfasst:
eine erste Seitenwand (122) und eine zweite Seitenwand (124), angeordnet gegenüber der ersten Seitenwand (122);
und eine dritte Seitenwand (126) und eine untere Wand (128), die zwischen der ersten Seitenwand (122) und der zweiten Seitenwand (124) verbunden sind,
wobei die erste Seitenwand (122), die zweite Seitenwand (124) und die dritte Seitenwand (126) entlang eines äußeren Umfangs der unteren Wand (128) und senkrecht zur mittleren Platte (125) angeordnet sind, die Montagenut (101) definiert ist durch die untere Wand (128), die erste Seitenwand (122), die zweite Seitenwand (124) und die dritte Seitenwand (126), und sich der Klangausgabekanal (103) in der unteren Wand (128) befindet;
wobei die erste Seitenwand (122) mit einer Wellenbohrung (105) versehen ist, die mit der Montagenut (101) verbunden ist; wobei die Endgerätevorrichtung (10) ferner einen innerhalb des mittleren Rahmens (120) angeordneten Antriebsmechanismus (300) umfasst, der Antriebsmechanismus (300) einen Treiber (310) und eine mit dem Treiber (310) verbundene Ausgangswelle (320) umfasst, die Ausgangswelle (320) des Antriebsmechanismus (300) durch die Wellenbohrung (105) verläuft und mit der Montagebasis (200) verbunden ist, der Treiber (310) ausgelegt ist zum Antreiben der Ausgangswelle (320) zum Drehen der Montagebasis (200), um in der ersten Position oder der zweiten Position zu sein; und wobei sich die Wellenbohrung (105) zum äußeren Rahmen (123) erstreckt, eine erste Vertiefung (106) im äußeren Rahmen (123) definiert ist, der Treiber (310) mit der mittleren Platte (125) verbunden ist und zumindest ein Teil der Ausgangswelle (320) in der ersten Vertiefung (106) aufgenommen ist;
wobei die Ausgangswelle (320) eine erste Wellenhülse (321) und eine zweite Wellenhülse (323) umfasst, die erste Wellenhülse (321) durch den Treiber (310) angetrieben wird und die zweite Wellenhülse (323) mit der Montagebasis (200) verbunden ist; und wobei eine aus der ersten Wellenhülse (321) und der zweiten Wellenhülse (323) mit einem Klemmschlitz (3211) versehen ist, die andere aus der ersten Wellenhülse (321) und der zweiten Wellenhülse (323) mit einem Vorsprung (3231) versehen ist, der Vorsprung (3231) im Klemmschlitz (3211) aufgenommen ist, die erste Wellenhülse (321) ausgelegt ist zum Antreiben, über die zweite Wellenhülse (323), der Montagebasis (200) zum Drehen relativ zum Hauptkörper (100) ;
**dadurch gekennzeichnet, dass** die Ausgangswelle (320) ferner einen Wellenstab (325), ein elastisches Element (327) und ein Positionsbegrenzungselement (329) umfasst, wobei die erste Wellenhülse (321) mit einer ersten Montagebohrung (3213) versehen ist, die zweite Wellenhülse (323) mit einer zweiten Montagebohrung (3233) versehen ist, die erste Montagebohrung (3213) entlang einer axialen Richtung der ersten Wellenhülse (321) durch die erste Wellenhülse (321) verläuft und die zweite Montagebohrung (3233) entlang einer axialen Richtung der zweiten Wellenhülse (323) durch die zweite Wellenhülse (323) verläuft; wobei der Wellenstab (325) einen Wellenkörper (3251) und einen mit dem Wellenkörper (3251) verbundenen Verbindungsteil (3253) umfasst, ein Teil des Wellenkörpers (3251) durch die erste Montagebohrung (3213) verläuft, der andere Teil des Wellenkörpers (3251) durch die zweite Montagebohrung (3233) verläuft und der Verbindungsteil (3253) in der ersten Montagebohrung (3213) aufgenommen ist; wobei eine weitere Stufe (3215) an einer inneren Wand der ersten Montagebohrung (3213) gebildet ist, das elastische Element (327) in der ersten Montagebohrung (3213) aufgenommen ist und über den Wellenkörper (3251) gezogen ist, ein Ende des elastischen Elements (327) an der weiteren Stufe (3215) anliegt und das andere Ende des elastischen Elements (327) am Verbindungsteil (3253) anliegt; wobei der Verbindungsteil (3253) mit einer Positionsbegrenzungsbohrung (3254) versehen ist, die erste Wellenhülse (321) mit einer Klemmbohrung (3217) entlang einer radialen Richtung der ersten Wellenhülse (321) versehen ist, das Positionsbegrenzungselement (329) durch die Klemmbohrung (3217) verläuft und an der ersten Wellenhülse (321) fixiert ist, und das Positionsbegrenzungselement (329) durch die Positionsbegrenzungsbohrung (3254) verläuft; wobei die erste Wellenhülse (321) ausgelegt ist zum Drehen und Antreiben, über das Positionsbegrenzungselement (329), des Wellenstabs (325) zum Drehen; und wobei, wenn die Montagebasis (200) in der ersten Position oder der zweiten Position ist, der Vorsprung (3231) vom Klemmschlitz (3211) lösbar ist und die erste Wellenhülse (321) ausgelegt ist zum Bewegen in eine Richtung weg von der zweiten Wellenhülse (323) und zum Zusammendrücken des elastischen Elements und das Positionsbegrenzungselement (329) ausgelegt ist zum Bewegen innerhalb der Positionsbegrenzungsbohrung (3254) in die Richtung weg von der zweiten Wellenhülse (323).

2. Endgerätevorrichtung (10) nach Anspruch 1, wobei das Anzeigebildschirmmodul (110) einen Anzeigebildschirm und eine am Anzeigebildschirm angeordnete Bildschirmschutzabdeckung (111) umfasst, wobei eine erste Kerbe (131) in der hinteren Abdeckung (130) definiert ist, eine zweite Kerbe (121) im mittleren Rahmen (120) definiert ist.

3. Endgerätevorrichtung (10) nach Anspruch 2, wobei eine erste Stufe mit einer Stufenoberfläche (129) an einer Seite von zumindest einer aus der ersten Seitenwand (122), der zweiten Seitenwand (124) und der dritten Seitenwand (126) gebildet ist, die entfernt von der Montagenut (101) ist, und eine Höhe der Stufenoberfläche (129) niedriger als eine Höhe einer Endfläche von jeder aus der ersten Seitenwand (122), der zweiten Seitenwand (124) und der dritten Seitenwand (126) ist, die von der unteren Wand (128) entfernt ist; und
wobei die hintere Abdeckung (130) an der Stufenoberfläche (129) befestigt ist und eine Seite aus jeder der ersten Seitenwand (122), der zweiten Seitenwand (124) und der dritten Seitenwand (126), die entfernt von der unteren Wand (128) ist, durch die erste Kerbe (131) verläuft.

4. Endgerätevorrichtung (10) nach Anspruch 1, wobei ein weiteres Kameramodul (140) an einer Seite der dritten Seitenwand (126) befindlich ist, die entfernt von der Montagenut (101) ist, das weitere Kameramodul (140) in einem zwischen dem mittleren Rahmen (120) und der hinteren Abdeckung (130) definierten Montageraum aufgenommen ist, und
die hintere Abdeckung (130) mit einem Lichtübertragungsbereich versehen ist, wobei der Lichtübertragungsbereich ausgelegt ist zum Übertragen von Licht, das durch das weitere Kameramodul (140) empfangen werden soll.

5. Endgerätevorrichtung (10) nach Anspruch 1, wobei die zweite Seitenwand (124) mit einem Loch (107) versehen ist, das die zweite Seitenwand (124) durchdringt und mit der Montagenut (101) verbunden ist, sich das Loch (107) zum äußeren Rahmen (123) erstreckt und dadurch eine zweite Vertiefung (108) im äußeren Rahmen (123) definiert wird; und
wobei die Endgerätevorrichtung (10) ferner ein Drahtrohr (400) umfasst, wobei das Drahtrohr (400) durch das Loch (107) verläuft und in die Montagebasis (200) eintritt und zumindest ein Teil des Drahtrohrs (400) in der zweiten Vertiefung (108) aufgenommen ist.

6. Endgerätevorrichtung (10) nach Anspruch 1, wobei die Ausgangswelle (320) ferner einen Sicherungsring (328) umfasst und der Sicherungsring (328) an einem Ende des Wellenkörpers (3251) festgeklemmt ist, das entfernt von der ersten Wellenhülse (321) ist, und der Sicherungsring (328) ausgelegt ist zum Anliegen an der zweiten Wellenhülse (323) während eines Prozesses, bei dem der Vorsprung (3231) vom Klemmschlitz (3211) gelöst wird.

7. Endgerätevorrichtung (10) nach einem der Ansprüche 1-6, wobei die Montagebasis (200) einen Grundkörper (230) und eine Abdeckplatte (240) umfasst, eine Aufnahmenut (231) im Grundkörper (230) definiert ist, der Empfänger (210) und das Kameramodul (220) in der Aufnahmenut (231) aufgenommen sind und die Abdeckplatte (240) die Aufnahmenut (231) abdeckt:
ein erstes Schallloch (241) in der Abdeckplatte (240) bereitgestellt ist, das erste Schallloch (241) für eine Klangausgabe des Empfängers (210) ausgelegt ist; und
wobei, wenn die Montagebasis (200) in der ersten Position ist, sich die Abdeckplatte (240) an einer Seite des Grundkörpers (230) befindet, die zum Anzeigebildschirmmodul (110) zeigt, und das erste Schallloch (241) mit dem Klangausgabekanal (103) verbunden ist.

8. Endgerätevorrichtung (10) nach Anspruch 7, wobei die Montagebasis (200) ferner eine Druckplatte (250) umfasst, zwei einander gegenüberliegende Seiten der Druckplatte (250) entsprechend am Empfänger (210) und der Abdeckplatte (240) anliegen, und
ein zweites Schallloch (251) in der Druckplatte (250) bereitgestellt ist, wobei das zweite Schallloch (251) auch für die Klangausgabe des Empfängers (210) ausgelegt ist, und das zweite Schallloch (251) mit dem ersten Schallloch (241) verbunden ist.

9. Endgerätevorrichtung (10) nach Anspruch 7, wobei der Grundkörper (230) mit einem ersten Durchgangsloch (233) versehen ist, das mit der Aufnahmenut (231) verbunden ist, eine erste Vertiefung (235) an einer Seite des Grundkörpers (230) angeordnet ist, die entfernt von der Aufnahmenut (231) ist, das erste Durchgangsloch (233) von der ersten Vertiefung (235) getrennt ist; und
wobei das Kameramodul (220) eine Kamera (221) und eine Blitzvorrichtung (223) umfasst, das erste Durchgangsloch (233) ausgelegt ist zum Empfangen von Licht für die Kamera (221) und die erste Vertiefung (235) ausgelegt ist zum Montieren der Blitzvorrichtung (223).

10. Endgerätevorrichtung 9, wobei eine zweite Vertiefung (237) am Grundkörper (230) auf einer gleichen Seite wie die erste Vertiefung (235) bereitgestellt ist, das erste Durchgangsloch (233) und die erste Vertiefung (235) an einem Boden der zweiten Vertiefung (237) befindlich sind;
wobei die Montagebasis (200) ferner eine Objektivabdeckung (260) umfasst, die Objektivabdeckung (260) in der zweiten Vertiefung (237) angeordnet ist und die Kamera (221) abdeckt;
wobei ein Lichtübertragungsloch (261) in der Objektivabdeckung (260) bereitgestellt ist und die Blitzvorrichtung (223) durch das Lichtübertragungsloch (261) verläuft; und
wobei ein Boden der ersten Vertiefung (235) mit einem zweiten Durchgangsloch (239) versehen ist, das mit der Aufnahmenut (231) verbunden ist, die Montagebasis (200) ferner eine flexible Leiterplatte (270) umfasst und die flexible Leiterplatte (270) durch das zweite Durchgangsloch (239) verläuft und mit der Blitzvorrichtung (223) elektrisch verbunden ist.

## Revendications

1. Dispositif de terminal (10), comprenant :
un corps principal (100) comprenant un module d'écran d'affichage (110), dans lequel une rainure de montage (101) est prévue sur un côté arrière du corps principal (100) qui est à l'opposé du module d'écran d'affichage (110), et un canal de sortie de son (103) est prévu dans une paroi de rainure de la rainure de montage (101) et est en communication avec un côté avant du corps principal (100) où une zone d'affichage du module d'écran d'affichage (110) est située ; et
une base de montage (200) comprenant un récepteur (210) et un module de caméra (220), dans lequel la base de montage (200) peut entrer en rotation relativement au corps principal (100) et peut permuter entre une première position et un seconde position,
dans lequel, alors que la base de montage (200) est dans la première position, la base de montage (200) est logée dans la rainure de montage (101), le module de caméra (220) est exposé au côté arrière du corps principal (100), et le récepteur (210) est configuré pour sortir un son par le biais du canal de sortie de son (103) ; et
dans lequel, alors que la base de montage (200) est dans la seconde position, la base de montage (200) est hors de la rainure de montage (101), et le module de caméra (220) est exposé au côté avant du corps principal (100) ; et le récepteur (210) est configuré pour sortir le son depuis le côté arrière du corps principal (100) ;
dans lequel le corps principal (100) comprend en outre un cadre médian (120) et un couvercle arrière (130), le module d'écran d'affichage (110) et le couvercle arrière (130) sont respectivement assemblés sur deux côtés opposés du cadre médian (120), la rainure de montage (101) s'étend jusqu'à un bord latéral du couvercle arrière (130), et la rainure de montage (101) s'étend jusqu'à un bord latéral du cadre médian (120) ;
dans lequel le cadre médian (120) comprend une plaque médiane (125) et un cadre extérieur (123) disposé à une périphérie extérieure de la plaque médiane (125), le module d'écran d'affichage (110) et le couvercle arrière (130) sont respectivement assemblés sur deux côtés opposés de la plaque médiane (125), le cadre extérieur (123) est en outre disposé à une périphérie extérieure du module d'écran d'affichage (110), et le canal de sortie de son (103) est situé dans le cadre extérieur (123) ;
dans lequel le cadre médian (120) comprend en outre : une première paroi latérale (122) et une deuxième paroi latérale (124) disposée en face de la première paroi latérale (122) ; et une troisième paroi latérale (126) et une paroi inférieure (128) qui sont reliées entre la première paroi latérale (122) et la deuxième paroi latérale (124),
dans lequel la première paroi latérale (122), la deuxième paroi latérale (124) et la troisième paroi latérale (126) sont disposées le long d'une périphérie extérieure de la paroi inférieure (128) et perpendiculaires à la plaque médiane (125), la rainure de montage (101) est définie par la paroi inférieure (128), la première paroi latérale (122), la deuxième paroi latérale (124) et la troisième paroi latérale (126), et le canal de sortie de son (103) est situé dans la paroi inférieure (128) ;
dans lequel la première paroi latérale (122) est pourvue d'un trou d'arbre (105) en communication avec la rainure de montage (101) ; le dispositif de terminal (10) comprend en outre un mécanisme d'entraînement (300) disposé à l'intérieur du cadre médian (120), le mécanisme d'entraînement (300) comprend un élément d'entraînement (310) et un arbre de sortie (320) relié à l'élément d'entraînement (310), l'arbre de sortie (320) du mécanisme d'entraînement (300) passe à travers le trou d'arbre (105) et est relié à la base de montage (200), l'élément d'entraînement (310) est configuré pour entraîner l'arbre de sortie (320) pour mettre en rotation la base de montage (200) pour être dans la première position ou la seconde position ; et le trou d'arbre (105) s'étend jusqu'au cadre extérieur (123), un premier évidement (106) est défini dans le cadre extérieur (123), l'élément d'entraînement (310) est relié à la plaque médiane (125), et au moins une partie de l'arbre de sortie (320) est logée dans le premier évidement (106) ;
dans lequel l'arbre de sortie (320) comprend un premier manchon d'arbre (321) et un second manchon d'arbre (323), le premier manchon d'arbre (321) est entraîné par l'élément d'entraînement (310), et le second manchon d'arbre (323) est relié à la base de montage (200) ; et un du premier manchon d'arbre (321) et du second manchon d'arbre (323) est pourvu d'une fente de serrage (3211), l'autre du premier manchon d'arbre (321) et du second manchon d'arbre (323) est pourvu d'une saillie (3231), la saillie (3231) est reçue dans la fente de serrage (3211), le premier manchon d'arbre (321) est configuré pour entraîner, par l'intermédiaire du second manchon d'arbre (323), la base de montage (200) pour la mettre en rotation relativement au corps principal (100) ;
**caractérisé en ce que** l'arbre de sortie (320) comprend en outre une tige d'arbre (325), un élément élastique (327) et un élément de limitation de position (329), le premier manchon d'arbre (321) est pourvu d'un premier trou de montage (3213), le second manchon d'arbre (323) est pourvu d'un second trou de montage (3233), le premier trou de montage (3213) passe à travers le premier manchon d'arbre (321) le long d'une direction axiale du premier manchon d'arbre (321), et le second trou de montage (3233) passe à travers le second manchon d'arbre (323) le long d'une direction axiale du second manchon d'arbre (323) ; la tige d'arbre (325) comprend un corps d'arbre (3251) et une portion de liaison (3253) reliée au corps d'arbre (3251), une partie du corps d'arbre (3251) passe à travers le premier trou de montage (3213), l'autre partie du corps d'arbre (3251) passe à travers le second trou de montage (3233), et la portion de liaison (3253) est reçue dans le premier trou de montage (3213) ; un épaulement supplémentaire (3215) est formé sur une paroi intérieure du premier trou de montage (3213), l'élément élastique (327) est logé dans le premier trou de montage (3213) et est emmanché sur le corps d'arbre (3251), une extrémité de l'élément élastique (327) prend appui contre l'épaulement supplémentaire (3215), et l'autre extrémité de l'élément élastique (327) prend appui contre la portion de liaison (3253) ; la portion de liaison (3253) est pourvue d'un trou de limitation de position (3254), le premier manchon d'arbre (321) est pourvu d'un trou de serrage (3217) le long d'une direction radiale du premier manchon d'arbre (321), l'élément de limitation de position (329) passe à travers le trou de serrage (3217) et est fixé au premier manchon d'arbre (321), et l'élément de limitation de position (329) passe à travers le trou de limitation de position (3254) ; le premier manchon d'arbre (321) est configuré pour entrer en rotation et entraîner, par l'intermédiaire de l'élément de limitation de position (329), la tige d'arbre (325) pour la mettre en rotation ; et, lorsque la base de montage (200) est dans la première position ou la seconde position, la saillie (3231) peut se séparer de la fente de serrage (3211) et le premier manchon d'arbre (321) est configuré pour se déplacer dans une direction à l'opposé du second manchon d'arbre (323) et pour comprimer l'élément élastique, et l'élément de limitation de position (329) est configuré pour se déplacer à l'intérieur du trou de limitation de position (3254) dans la direction à l'opposé du second manchon d'arbre (323).

2. Dispositif de terminal (10) selon la revendication 1, dans lequel le module d'écran d'affichage (110) comprend un écran d'affichage et un couvercle de protection d'écran (111) agencé sur l'écran d'affichage, une première entaille (131) est définie dans le couvercle arrière (130), une seconde entaille (121) est définie dans le cadre médian (120).

3. Dispositif de terminal (10) selon la revendication 2, dans lequel un premier épaulement ayant une surface d'épaulement (129) est formé sur un côté d'au moins une de la première paroi latérale (122), de la deuxième paroi latérale (124), et de la troisième paroi latérale (126) qui est à l'opposé de la rainure de montage (101), et une hauteur de la surface d'épaulement (129) est inférieure à une hauteur d'une face de d'extrémité chacune de la première paroi latérale (122), de la deuxième paroi latérale (124) et de la troisième paroi latérale (126) qui est à l'opposé de la paroi inférieure (128) ; et
le couvercle arrière (130) est fixé sur la surface d'épaulement (129), et un côté de chacune de la première paroi latérale (122), de la deuxième paroi latérale (124), et de la troisième paroi latérale (126) qui est à l'opposé de la paroi inférieure (128) passe à travers la première entaille (131).

4. Dispositif de terminal (10) selon la revendication 1, dans lequel un module de caméra supplémentaire (140) est situé sur un côté de la troisième paroi latérale (126) qui est à l'opposé de la rainure de montage (101), le module de caméra supplémentaire (140) est logé dans un espace de montage défini entre le cadre médian (120) et le couvercle arrière (130), et
le couvercle arrière (130) est pourvu d'une zone de transmission de lumière, la zone de transmission de lumière est configurée pour transmettre de la lumière destinée à être reçue par le module de caméra supplémentaire (140).

5. Dispositif de terminal (10) selon la revendication 1, dans lequel la deuxième paroi latérale (124) est pourvue d'un trou (107) pénétrant dans la deuxième paroi latérale (124) et en communication avec la rainure de montage (101), le trou (107) s'étend jusqu'au cadre extérieur (123) et ainsi un second évidement (108) est défini dans le cadre extérieur (123) ; et
le dispositif de terminal (10) comprend en outre un tube de fils (400), le tube de fils (400) passe à travers le trou (107) et accède à la base de montage (200), et au moins une partie du tube de fils (400) est logée dans le second évidement (108).

6. Dispositif de terminal (10) selon la revendication 1, dans lequel l'arbre de sortie (320) comprend en outre une bague à encliquetage (328), et la bague à encliquetage (328) est serrée à une extrémité du corps d'arbre (3251) qui est à l'opposé du premier manchon d'arbre (321), et la bague à encliquetage (328) est configurée pour prendre appui contre le second manchon d'arbre (323) durant un processus où la saillie (3231) est séparée de la fente de serrage (3211).

7. Dispositif de terminal (10) selon l'une quelconque des revendications 1 à 6, dans lequel la base de montage (200) comprend un corps de base (230) et une plaque couvercle (240), une rainure de logement (231) est définie dans le corps de base (230), le récepteur (210) et le module de caméra (220) sont logés dans la rainure de logement (231), et la plaque couvercle (240) couvre la rainure de logement (231) ;
un premier trou de son (241) est prévu dans la plaque couvercle (240), le premier trou de son (241) est configuré pour la sortie de son du récepteur (210) ; et
dans lequel, alors que la base de montage (200) est dans la première position, la plaque couvercle (240) est située sur un côté du corps de base (230) tourné vers le module d'écran d'affichage (110), et le premier trou de son (241) est en communication avec le canal de sortie de son (103).

8. Dispositif de terminal (10) selon la revendication 7, dans lequel la base de montage (200) comprend en outre une plaque de pression (250), deux côtés opposés de la plaque de pression (250) prennent respectivement appui contre le récepteur (210) et la plaque couvercle (240), et
un second trou de son (251) est prévu dans la plaque de pression (250), le second trou de son (251) est également configuré pour la sortie de son du récepteur (210), et le second trou de son (251) est en communication avec le premier trou de son (241).

9. Dispositif de terminal (10) selon la revendication 7, dans lequel le corps de base (230) est pourvu d'un premier trou débouchant (233) en communication avec la rainure de logement (231), un premier enfoncement (235) est disposé sur un côté du corps de base (230) qui est à l'opposé de la rainure de logement (231), le premier trou débouchant (233) est séparé du premier enfoncement (235) ; et
le module de caméra (220) comprend une caméra (221) et un flash (223), le premier trou débouchant (233) est configuré pour recevoir de la lumière pour la caméra (221), et le premier enfoncement (235) est configuré pour monter le flash (223).

10. Dispositif de terminal selon la revendication 9, dans lequel un second enfoncement (237) est prévu sur le corps de base (230) sur un même côté que le premier enfoncement (235), le premier trou débouchant (233) et le premier enfoncement (235) sont situés à un fond du second enfoncement (237) ;
la base de montage (200) comprend en outre un couvercle de lentille (260), le couvercle de lentille (260) est disposé dans le second enfoncement (237) et couvre la caméra (221) ;
un trou de transmission de lumière (261) est prévu dans le couvercle de lentille (260), et le flash (223) passe à travers le trou de transmission de lumière (261) ; et
un fond du premier enfoncement (235) est pourvu d'un second trou débouchant (239) en communication avec la rainure de logement (231), la base de montage (200) comprend en outre une carte de circuit imprimé flexible (270), et la carte de circuit imprimé flexible (270) passe à travers le second trou débouchant (239) et est électriquement connectée au flash (223).
